# EUROPÄISCHE PATENTSCHRIFT

(11) **EP 2 310 434 B1**
(45) Veröffentlichungstag und Bekanntmachung des Hinweises auf die Patenterteilung: **25.04.2018**
(21) Anmeldenummer: 08874331.5
(22) Anmeldetag: 22.12.2008
(51) Int. Cl.: C08G 8/38, C08G 8/28, C08C 19/30, C08C 19/36, C08J 5/24

(54) **MODIFIZIERTE PHENOLHARZE**
MODIFIED PHENOLIC RESIN
RÉSINES PHÉNOLIQUES MODIFIÉES

(30) Priorität: 20.12.2007 EP 07024756
(43) Veröffentlichungstag der Anmeldung: 20.04.2011
(73) Patentinhaber: Evonik Degussa GmbH, 45128 Essen (DE)
(72) Erfinder: Sprenger, Stephan, 22113 Oststeinbek (DE)
(86) Internationale Anmeldenummer: PCT/EP2008/011051
(87) Internationale Veröffentlichungsnummer: WO 2009/080357

(56) Entgegenhaltungen:
- EP-A- 0 002 517
- EP-A- 0 043 935
- GB-A- 1 256 705
- GB-A- 2 026 497
- GB-A- 2 075 517
- JP-A- 57 070 119
- US-A- 4 155 947
- US-A- 4 647 631
- US-A- 5 215 608
- US-A- 5 478 885

## Beschreibung

Die vorliegende Erfindung betrifft modifizierte Phenolharze sowie Verfahren zu deren Herstellung. Weiterer Gegenstand der vorliegenden Erfindung sind Phenolharzformulierungen, welche die modifizierten Phenolharze enthalten, sowie Verfahrenzu deren Herstellung. Schließlich betrifft die vorliegende Erfindung spezifische Verwendungen entsprechender Phenolharze bzw. Phenolharzformulierungen und die Verwendung von Blockcopolymeren zur Herstellung von Phenolharzen.

Phenolharze sind Kondensationsprodukte von Phenolen mit Aldehyden, insbesondere mit Formaldehyd. Phenolharze gehören zur Familie der Duroplaste. Durch die dreidimensionale Vernetzung besitzen sie im ausgehärteten Zustand keinen Schmelzpunkt. Oberhalb einer spezifischen Temperaturgrenze beginnen sie, sich zu zersetzen. Phenolharze werden als Bindemittel, Leime oder Rohstoffe zur Herstellung von Formmassen, Elektro- und Wärmeisolierstoffen, Lacken, Reibbelägen, Schleifmitteln, Holzwerkstoffen und Faserformteilen verwendet. Darüber hinaus werden Phenolharze als Gießerei- und Feuerfestbindemittel eingesetzt.

Wesentliche Anwendungsgebiete der mit Phenolharzen hergestellten Produkte umfassen dieElektro-, Bau- und Holzindustrie, den Fahrzeugbau sowie die Luft- und Raumfahrt, da sie sie eine hohe Festigkeit, Steifigkeit und Oberflächenhärte sowie Temperaturbeständigkeit aufweisen. Der niedrige Wärmeausdehnungskoeffizient macht sie formstabil und thermisch belastbar. Weiterhin zeichnen sich Phenolharze durch eine hervorragende Brand- und Flammresistenz sowie durch ein hohes elektrisches und thermisches Isolationsvermögen aus.

In der Phenolharzsynthese reagieren Phenolkomponente und Aldehydkomponente in einer katalytischen Kondensationsreaktion unter Wasserabspaltung zu niedermolekularen Polymeren. Die Wahl des Katalysators ist neben dem Verhältnis von Phenolkomponente und Aldehydkomponente ausschlaggebend für die Art des Phenolharzes. Bei der Synthese von Novolaken werden Säuren als Katalysatoren genutzt. Für die Kondensationsreaktion von Resolen kommen Basen zum Einsatz.

Ein Nachteil an den herkömmlichen Phenolharzsystemen besteht jedoch darin, dass die Phenolharze häufig eine gewisse unerwünschte Sprödigkeit aufweisen, so dass sie nur in einem kleinen Bereich dehnbarsind.

Zur Herabsetzung der Sprödigkeit ist aus der WO 97/17385 Anordnung bekannt, Phenol- harze durch den Einbau von Segmenten auf Basis von Flüssigkautschuken zu modifizieren. Zu diesem Zweck werden die Flüssigkautschuke mit Formaldehyd oder Derivaten davon und Phenol oder Derivaten davon während der Phenolharzsynthese zur Reaktion gebracht. Hierdurch erfolgt ein chemischer Einbau der Flüssigkautschuke in das Phenolharzgerüst. Der Einbau des Kautschuks erfolgt dabei im Allgemeinen über eine Einfachbindung jeweils am Anfang- und am Kettenende des Kautschukmoleküls, welche zu diesem Zweck am Anfang und Ende der Kautschukmoleküle funktionelle Gruppen, beispielsweise Carboxygruppen oder Aminogruppen tragen.

Die resultierenden Phenolharze weisen im Allgemeinen eine geringere Sprödigkeit als die entsprechenden unmodifizierten Phenolharze auf, da eine gewisse Flexibilisierung des Phenolharzgerüsts aufgrund der geringeren Netzwerkdichte erreicht wird.

Als verwendbare Flüssigkautschuke sind beispielsweise funktionelle Gruppen enthaltende Polybutadien-, Acrylbutadien- oder Silikonkautschuke sowie Vinylpyridin- oder Acrylsäure-Butadien-Styrol-Polymere bekannt. Als funktionelle Gruppen weisen diese Flüssig- kautschuke beispielsweise Hydroxyl-, Carboxyl-, Amino-oder Epoxidgruppen auf.

Nachteilig an dieser Verfahrensweise ist jedoch, dass durch die Modifizierung die chemische und thermische Alterung der Phenolharze verschlechtert werden. Auch kann die Festigkeit des Harzes abnehmen. Insgesamt wird die Verarbeitbarkeit schlechter. Auch weist es eine sehr kurze Lagerstabilität auf.

EP043935 offenbart ein stickstoffbasische Gruppen tragendes Polyadditions/ Polykondensationsprodukt, wobei ein Vorprodukt aus einer Polydienyl substituierten Maleinsäure und Formaldehyd gebildet wird, im Sinne der vorliegenden Erfindung könnte dieses Vorprodukt als ein Weichsegment angesehen werden, welches nachfolgend in der Bildung eines Phenolharzes eingesetzt wird.

Darüber hinaus ist aus der JP 5770119 ein Verfahren für eine Phenolharzherstellung bekannt, bei dem zunächst ein Zwischenprodukt aus Flüssigkautschuk und einer Epoxidkomponente bereitgestellt wird. Dies reagiert anschließend in einem zweiten Schritt mit einem vorkondensierten Phenolharz. Das Zwischenprodukt reagiert dabei mit dem Phenolharz vor allem über seinen hohen Anteil an reaktiven Epoxygruppen, der sich an einem messbaren Epoxidäquivalentgewicht von etwa 1000 oder darunter zeigt. Das führt unter anderem zu einer weiteren Vernetzung des Phenolharzes, die wiederum eine sehr hohe Viskosität des vorkondensierten Phenolharzes nach sich zieht. Die hohe Viskosität erschwert die Weiterverarbeitung des Phenolharzes; insbesondere bei der Imprägnierungvon Geweben oder Papieren. Daneben ist das aus dieser japanischen Druckschrift bekanntePhenolharz nicht ausreichend lagerstabil. So zeigt es schon nach nur wenigen Tagen eine Phasentrennung.

GB 1256705 offenbart Zusammensetzungen enthaltend ein Latex und die Materialien für ein Phenol-Formaldehyd-Harz. Das eingesetzte SBR Latex wir nachfolgend in der Bildung eines Phenolharzes eingesetzt.

Aus der der GB 2 075 517 A ist ein Phenolharz bekannt, bei dem zunächst ein Flüssigkautschuk mit einer phenolischen Komponente zur Reaktion gebracht wird, um dann durch Reaktion mit einer Aldehydkomponente das Phenolharz zu bilden. Dabei werden Polybutadiene als Flüssigkautschuke verwendet, bei denen sich die phenolische Komponente an die Doppelbindung addiert. Als Ergebnis weisen die Flüssigkautschuke Aromaten auf, die über das Polymer statistisch verteilt sind, und bei denen im Rahmen der Phenolharzherstellung *die* Flüssigkautschukpolymerketten zahlreiche Vernetzungsmöglichkeiten bieten. Damit stellt sich unter anderem auch hier das Problem der erhöhten Viskosität des damit gebildeten Phenolharzes.

Als Aufgabe der vorliegenden Erfindung ergibt sich somit, zumindest einen Nachteil im Stand der Technik zu verbessern, insbesondere Phenolharze mit einer verringerten Sprödigkeit und damit einer erhöhten Dehnbarkeit zur Verfügung zu stellen, bei welchen allerdings die Alterungseigenschaften im Wesentlichen unverändert bleiben. Ebenso sollte das Phenolharzes möglichst gut in der Endanwendung verarbeitbar sein.

Gelöst wird diese Aufgabe durch ein Verfahren zur Herstellung eines Phenolharzes nach Anspruch 1. Weitere Aspekte der Erfindung und vorteilhafte Weiterentwicklungen sind Gegenstand der weiteren Ansprüche.

Erfindungsgemäß wurde erkannt, dass durch den Einbau von aromatischen Segmenten in Form von Blockpolymeren in das Phenolharzgerüst einerseits eine verringerte Sprödigkeitund somit auch eine erhöhte Dehnbarkeit des Phenolharzes zu erreichen ist. Die thermischeund chemische Alterungsbeständigkeit bleibt hingegen erhalten.

Das Segment auf Basis von aromatischen Einheiten kann erfindungsgemäß dadurch in das Grundgerüst integriert werden, dass ein aromatische Einheiten aufweisender Kautschuk, insbesondere ein Flüssigkautschuk, während der Herstellung des Phenolharzes zugegen ist. An dem aromatischen Kautschuk kommt es während der Phenolharzdarstellung dabei zu einer Umsetzung mit der Aldehydkomponente unter Ausbildung von Methylolgruppen (-CH20H). Diese Methyolgruppen können dann an der Kondensation zur Herstellung der Phenol-Aldehyd-Kondensate analog zu dem Phenol selbst teilnehmen. Damit erfolgt der Einbau des Blockcopolymers in das Phenol-Formaldehyd-Kondensat (nämlich über die Methylolgruppen des Kautschuks). Nach der Lehre der WO 97/17385 erfolgt der Einbau demgegenüber über die entsprechenden Hydroxyl-, Carboxyl-, Amino- oder Epoxidgruppen des Kautschuks und nach der Lehre der JP 5770119 über die Epoxidgruppen des Kautschuks. Damit ändert sich der strukturelle Aufbau des resultierenden Phenolharzes im Vergleich zum Stand der Technik.

Werden aromatische Einheiten aufweisende Kautschuke während der Phenolharzsynthese als Reaktionspartner neben dem Phenol(derivat) und dem Formaldehyd(derivat) verwendet, wird dem Formaldehyd(derivat) somit als weiteren Vernetzungspartner ein aromatischer Reaktionspartner angeboten. Hierdurch erhöht sich die Vernetzungsdi chte gegenüber Phenolharzen gemäß dem Stand der Technik, da nämlich mehrere chemische Bindungen über die aromatische Einheit, insbesondere stabile Methylengruppen, entstehen. Diese Vernetzung führt zu einer modifizierten Morphologie im Vergleich zu den aus der WO 97/17385 A bekannten Phenolharzsystemen. Die resultierende Morphologie weist eine besonders gute ·chemische und thermische Alterungsbeständigkeit auf. Auch die Beständigkeiten bei der Alterung der vernetzten Systeme unter Feuchtigkeitseinfluss werden deutlich verbessert.

Neben diesen verbesserten Alterungsbeständigkeiten wird überraschenderweise auch eine hervorragende Dehnbarkeit (Flexibilisierung) der Phenolharze erhalten, obwohl dieses aufgrund der größeren Anzahl von Vernetzungspunkten am aromatischen Teil des in das Phenolharzgerüst eingebauten Kautschuks nicht zu erwarten war.

Die erfindungsgemäßen Phenolharze sind darüber hinaus möglichst auch lagerstabil. Lagerstabilität im Sinne der vorliegenden Erfindung bedeutet vor allem eine gute Phasenbeständigkeit, also die Tatsache, dass das Phenolharz auch nach einer Lagerung über einen längeren Zeitraum bei etwa 4 bis 10°C, aber auch bei Raumtemperatur keine Phasentrennung zeigt. Vorteilhafterweise sind die erfindungsgemäßen Phenolharze bei 4- 100, bevorzugt 8°C, für mehr als zwei Tage, mindestens für eine Woche und besonders von mehr als zwei oder vier Monate lagerstabil, d.h. zeigen keine oder kaum eine erkennbare Phasentrennung.

Vorteilhafterweise entsprechen die erfindungsgemäßen Phenolharze in ihrem Brandverhalten im wesentlichen den bisher bekannten Phenolharzen. Dies gilt sowohl für die Entflammbarkeit als auch für die Flammenausbreitung. Im Brandfalle entspricht die Rauchgasdichte der erfindungsgemäßen Phenolharze vorteilhafterweise im Wesentlichen derjenigen der Phenolharze nach dem Stand der Technik.

In einer bevorzugten Ausführungsform der vorliegenden Erfindung werden unter dem Begriff der aromatische Einheiten aufweisenden Kautschuke keine Acrylsäure-Butadien-Styrol- Polymere verstanden. Diese Polymere werden in WO 97/17385 A genannt; allerdings erfolgt dort der Einbau in das Phenolharzgerüst nicht über Methylolgruppen, welche durch Um-setzung mit der Aldehydkomponente gebildet werden, sondern über funktionelle Gruppen an dem Polymer.

Die für die vorliegende Erfindung geeigneten Kautschuke werden als sog. "Weichsegment" mit einem reaktive aromatische Einheiten enthaltenden sog. "Hartsegment" zu einem Blockcopolymer umgesetzt, welches dann in der Phenolharzsynthese eingesetzt wird. Das Blockpolymer wird in der Regel durch Umsetzung von Kautschuken mit reaktiven aromatischen Systemen hergestellt.

Mit einem steigenden Anteil an aromatische Einheiten enthaltenden Segmenten in dem Phenolharz kann dessen Elastizität gesteigert werden.

Der Anteil an aromatische Einheiten enthaltenden Segmenten kann - in Abhängigkeit der gewünschten Sprödigkeit bzw. Dehnbarkeit des Phenolharzes - in weiten Bereichen variiert werden. Allerdings ist es bevorzugt, wenn der Anteil an aromatische Einheiten aufweisenden Segmenten in dem Phenolharz, jeweils bezogen auf das Gesamtgewicht des Phenolharzes, 0,5 bis 15 Gew.-%, insbesondere 1 bis 10 Gew.-%, besonders bevorzugt 2 bis 8 Gew.-%, beträgt. Ebenso sind 4 bis 6 Gew.-% möglich.

Das erfindungsgemäße Phenolharz enthält, jeweils bezogen auf das Gesamtgewicht des Phenolharzes, 0,5 bis 15 Gew.-%, insbesondere 1 bis 10 Gew.-%, besonders bevorzugt 2 bis 8 Gew.-% Anteil an Blockpolymer. Der Anteil kann auch 4 bis 6 Gew.-% betragen. Der Anteil an Blockpolymer ist wesentlich für das Erreichen einer gewünschten Zähigkeit unter Beibehaltung einer ausreichenden Verarbeitbarkeit.

Durch die Ausbildung von Segmenten eines aromatische Einheiten aufweisenden Kautschuks in dem erfindungsgemäßen Phenolharz entsteht darüber hinaus ein besonders schlagzähiges Phenolharz.

### Phenolkomponente

Als phenolische Verbindungen für den Aufbau des Phenolharzes können beliebige aromatische Verbindungen verwendet werden, welche eine phenolische Gruppe tragen.

Die chemische Struktur der Phenolverbindungen unterliegt im Allgemeinen keiner besonderen Beschränkung und es können sowohl einkernige als auch mehrkernige Phenole verwendet werden. Die ein- oder mehrkernigen Phenole können wiederum ein- oder mehr- wertig sein, dass heißt eine oder mehrere Hydroxylgruppen tragen.

Beispiele geeigneter phenolischer Verbindungen können ausgewählt werden aus der Gruppe, bestehend aus Phenol; mit Alkyl substituierten Derivaten des Phenols, beispiels- weise o-, m- oder p-Kresol; höher alkylierten Phenolen; mit Halogen substituierten Phenolen, beispielsweise Chlor- oder Bromphenol; mehrwertigen Phenolen, beispielsweise Resorcin oder Brenzkatechin; phenolischem Melamin; und mehrkernigen Phenolen wie Naphthole, Bisphenol A oder Bisphenol F.

### Aldehydkomponente

Als Aldehydkomponente können in dem Phenolharz alle Verbindungen der allgemeinen Formel R-CHO eingesetzt werden. Entsprechende Aldehyde können ausgewählt werden aus der Gruppe, bestehend aus Formaldehyd, Acetaldehyd, Propionaldehyd, n-Butyraldehyd, iso-Butyraldehyd, Glyoxal und Furfural.

Ein bevorzugter Aldehyd, welcher im Rahmen der vorliegenden Erfindung verwendet werden kann, ist Formaldehyd. Formaldehyd kann dabei in einer Form eingesetzt werden, welche Formaldehyd erst während der eigentlichen Umsetzung oder aber kurz vorher abspaltet. Beispiele hierfür sind Paraformaldehyd oder Trioxan. Eine weitere bevorzugte Zugabeform ist eine wässrige Lösung des Formaldehyds (Formalin).

### Aromatische Einheiten aufweisender Kautschuk

Der Segmentanteil an aromatischem Kautschuk in dem erfindungsgemäßen Phenolharz geht im Allgemeinen auf ein Blockcopolymer zurück, welches während der Synthese der Phenol- harze verwendetwird.

Der Segmentanteil an aromatischem Kautschuk sorgt im Rahmen der erfindungsgemäßen Phenolharze für eine gewisse Dehnbarkeit und damit Flexibilisierung des Harzes, ohne gleichzeitig andere Nachteile, insbesondere im Hinblick auf die chemische und thermische Alterung, hervorzurufen.

Der aromatische Einheiten aufweisende Kautschuk kann sowohl für unter alkalisch katalysierter Kondensation erhaltene selbsthärtende Harze als auch für unter saurer katalysierter Kondensation erhaltene Novolake, welche mit typischen Härtungsmitteln, bei- spielsweise Hexamethylentetramin, gehärtet werden können, eingesetzt werden.

Im Rahmen der vorliegenden Erfindung ist es auch möglich, Mischungen entsprechender aromatische Einheiten aufweisender Kautschuke in Phenolharzen zu verwenden.
Die Blockcopolymere werden im Allgemeinen aus der Umsetzung von reaktiven Flüssigkautschuken (Weichsegment) mit reaktiven aromatischen Systemen (Hartsegment) hergestellt.

### (i) Reaktiver Flüssigkautschuk (Weichsegment)

Das Weichsegment des aromatischen Kautschuks, welcher im Rahmen der vorliegenden Erfindung in das Phenolharzgerüst eingebaut wird, unterliegt keiner besonderen Beschränkung, insoweit er in der Lage ist, mit dem aromatischen System zu reagieren. Hierfür weist der reaktive Kautschuk vorzugsweise mindestens eine, insbesondere mindestens zwei funktionelle Gruppen auf. Der Kautschuk ist vorzugsweise ein flexibles, langkettiges Molekül mittlerer Maimasse, welches reaktive Gruppen zur Umsetzung mit dem aromatischen System aufweist. Die Art der reaktiven Gruppen unterliegt keiner besonderen Beschränkung, soweit die reaktiven Gruppen des Kautschuks in der Lage sind, mit dem romatischen System zu reagieren.

Die Molmasse des Kautschuks beträgt vorzugsweise 2500 bis 8000 g/mol, besonders bevorzugt 3000 bis 6000 g/mol, insbesondere 3200 bis 4500 g/mol. Erfindungsgemäße Phenolharze mit derartigen Kautschuken sind durch eine möglichst niedrige Viskosität und guten Eigenschaften bei der Schlagzähigkeit gekennzeichnet.

Als Kautschuke können beispielsweise funktionalisierte Homopolymere ausgewählt aus der Gruppe bestehend aus Homopolymeren des Butadiens, Copolymere des Butadiens mit Acrylnitril und Terpolymere aus Butadien, Acrylnitril und Acrylsäure, verwendet werden. Diese Kautschuke weisen als funktionalisierte Endgruppen Carboxy-, Amino- oder Methacrylatgruppen auf. Entsprechende Kautschuke sind beispielsweise von der Firma Emerald Performance Materials unter der Markenbezeichnung HyproTM RLP (früher Hycar® RLP) kommerziell erhältlich. Beispiele hierfür sind die Typen HyproTM CTBN 1300x8, Hypro™ ATBN 1300x45 und Hypro™ VTBNX 1300x33.

Weitere Beispiele für verwendbare Kautschuke sind carboxyfunktionelle Polybutadiene. Geeignete kommerziell erhältliche Kautschuke sind beispielsweise Poly bd® 45 CT und Poly bd® R45HTLO (mit Hydroxylgruppen funktionalisierte Butadiene) jeweils von der Firma Sartomer. Auch die epoxy- oder acrylatfunktionellen Flüssigpolymere der Poly bd®- Produktreihe sind einsetzbar.

Weitere Beispiele für verwendbare Kautschuke sind carboxylierte Copolymere aus Acrylnitril und Butadien, die von der Firma Zeon Chemicals hergestellt werden und unter der Bezeichnung Nipol® vertrieben werden. Ein Beispiel istdas Nipol® 1072.

Weitere Beispiele, welche ein geeignetes Weichsegment in das resultierende Phenolharz einbinden, sind hydroxylfunktionelle Kautschuke, beispielsweise Kautschuke der Markenbezeichnung Krasol® LBH 2000, welche kommerziell erhältlich sind von der Firma Sartomer. Dabei handelt es sich um Butadien-Homopolymere. Des Weiteren sind isocyanatfunktionelle Kautschuke, beispielsweise Kautschuke der Markenbezeichnungen Krasol® LBD 2000, geeignet.

Mit Maleinsäure gepfropfte flüssige Polybutadiene eignen sich ebenfalls als erfindungsgemäß zu verwendende Flüssigkautschuke. Ein Beispiel für diese Klasse der Flüssigkautschuke ist Ricon® 130MA13der Firma Sartomer.

### (ii) Aromatisches System (Hartsegment)

Das Hartsegment des erfindungsgemäß verwendeten Blockcopolymers unterliegt keiner besonderen Beschränkung, soweit es mindestens eine, vorzugsweise mindestens zwei reaktive Gruppen aufweist, welche mit den reaktiven Gruppen des Kautschuks reagieren können, und aromatische Anteile aufweist. Über den aromatischen Anteil des Hartsegments wird der Einbau des Blockcopolymers in das Phenolharz ermöglicht, indem die Aldehydkomponente während der Phenolharzsynthese nicht nur mit dem Phenol, sondern auch mit dem aromatischen Teil des Blockcopolymers unter Ausbildung von Methylolgruppen reagiert. Diese Methylolgruppen nehmen dann an der Kondensationsreaktion zur Herstellung des Phenolharzes in Analogie zur Phenolkomponente teil. Damit kommt es letztendlich zu einem Einbau des Blockcopolymers in das Phenolharz.

Reaktive aromatische Systeme sind im Sinne der Erfindung Systeme, die reaktive Aromaten enthalten. Unter reaktiven Aromaten werden dabei Aromaten verstanden, die als Reaktionspartner bei der Phenolharzbildung fungieren können. Dazu gehören z.B. Sauerstoffsubstituierte Aromaten, wie sie bei Phenolen oder Bisphenolen vorliegen. Die Aromaten können allerdings auch durch andere Substituenten wie Schwefel haltige Substituenten aktiviert werden. Bei den reaktiven Aromaten ist bevorzugter Weise die ortho- und/oder para-Position (bezogen auf den aktivierenden Substuenten) unsubstituiert, sodass an diesen Positionen erfindungsgemäß der Einbau in das Phenolharz erfolgen kann.

Das aromatische System des Blockcopolymers ist ausgewählt aus der Gruppe bestehend aus den Kondensationsprodukten von Epichlorhydrin und Bisphenol, epoxidierten Novolaken, DGEBA-Festharzen, Kresol-Novolak-Epoxidharzen, epoxidierten Cashewnussschalenölen, Tolyloxymethyloxiran und Phenalkaminen sowie aromatischen Säureanhydriden (z.B. Phthalsäureanhydrid, Trimellitsäureanhydrid, 3,4,3',4'- Benzophenontetracarbonsäureanhydrid, Ethylenglycolbistrimellitat und Glyceroltristrimellitat).

Die in dem erfindungsgemäß zu verwendenden Blockcopolymer vorhandenen Hartsegmente können somit beispielsweise aromatische Epoxidharze sein. Geeignet sind hierfür beispielsweise die Kondensationsprodukte von Epichlorhydrin an Bisphenolsystemen, beispielsweise an Bisphenol A und Bisphenol F. Kommerziell erhältliche Systeme sind beispielsweise ein Bisglycidylether von Bisphenol A (z.B. Araldite® GY 250 von der Firma Huntsman), ein Bisglycidylether von Bisphenol F (z.B. Epikote® 862 von der Firma Hexion) oder epoxidierte Novolake (z.B. DEN®431 von der Firma Dow Chemicals).

Auch höhermolekulare Derivate wie DGEBA-Festharze (z.B. Epikote® 1001 von der Firma Hexion) oder auch Kresol-Novolak-Epoxidharze (z.B. Araldite® ECN 9699 von der Firma Huntsman) können eingesetzt werden. Auch andere aromatische Systeme wie epoxidiertes Cashewnussschalenöl (z.B. Cardolite® NC 513 von der Firma Cardanol) oder Phenalkamine sindgeeignet.

Weitere Verbindungen, die als Hartsegment in den Blockcopolymeren verwendet werdenkönnen, sind Tolyloxymethyloxiran und aromatische Säureanhydride, beispielsweise Phthalsäureanhydrid, Trimellitsäureanhydrid, 3,4,3',4'-Benzophenontetracarbonsäureanhydrid, Ethylenglycolbistrimellitat oder Glyceroltristrimellitat.

### (iii) Herstellung des erfindungsgemäß zu verwendenden 8/ockcopolymers

Die Herstellung des erfindungsgemäß zu verwendenden Blockcopolymers kann durch die Umsetzung des Kautschuks mit dem aromatischen System erfolgen. Dazu kann es erforderlich sein, dass die beiden Komponente jeweils reaktive funktionelle Gruppen auf- weisen, so dass es bei der Umsetzung zu einer Reaktion dieser funktionellen Gruppen unter Ausbildung des erfindungsgemäß zu verwendenden Blockcopolymers kommt.

Bei demerfindungsgemäßen Blockcopolymer istdas Weichsegement (W) bevorzugt mit einem oder zwei Hartsegmenten (H) endständig verknüpft (s. Varianten (1) und (II) im folgenden Schema). Bei der Herstellung des Blockcopolymers kann auch durch Wahl geeigneter Reaktionsparameter wie z.B. durch Erhöhung des Mengenverhältnisses von Weichsegment zu Hartsegment eine alternierende Abfolge von Weich- und Hartsegment erzielt werden (siehe Variante {III) im folgenden Schema). Bei dieser alternierenden Abfolge liegt n bevorzugt zwischen 1 und 3.

### Schematische Darstellung zu den Verknüpfungsvarianten des Blockcopolymers:

H-W

(II) H-W-H

(III) H-(W-H)ₙ

Bei dem erfindungsgemäßen Blockcopolymer handelt es sich bevorzugt um ein Kettenmolekül, es können aber auch verzweigte, ringförmige oder vernetzte Strukturen entstehen.

Das entstehende Blockcopolymer weist vorteilhafterweise bei der Verwendung von Epoxidgruppen tragenden Edukten ein Epoxidäquivalentgewicht (EEW) von mehr als 1000, bevorzugt von mindestens 1200 oder 1500 und besonders bevorzugt von mindestens 2000 oder mindestens 5000 auf. Das Epoxidäquivalentgewicht ist ein Maß für den Anteil von Epoxidgruppen in einer Verbindung bezogen auf das Gewicht. Je höher das Epoxidäquivalentgewicht der Blockcopolymeren ist, desto geringer ist der Anteil an Epoxidgruppen und desto stärker verläuft der Einbau des Blockcopolymers in das Phenolharz über die reaktiven Aromaten.

Für die Bestimmung des Epoxidäquivalentsgewichtes stehen dem Fachmann bekannte Verfahren zur Verfügung. Die Bestimmung erfolgt in bevorzugter Weise gemäß der DIN-Norm 53 188 bzw. IS= 7142.

Das entstehende Blockpolymer weist vorzugsweise bei der Verwendung eines Carboxylgruppentragenden Flüssigkautschuks eine Säurezahl von weniger als 5, von weniger als 3, bevorzugt von weniger als 1 und besonders bevorzugt von weniger als 0.5 auf. Die Säurezahl ist ein Maß für den Anteil von Säuregruppen und gibt die Masse Kaliumhydroxid in mg an, die zur Neutralisation von 1 g der zu untersuchenden Probe erforderlich ist. Verfahren zur Verfügung. Die Bestimmung der Säurezahl erfolgt in bevorzugterWeise gemäß der DIN-Norm 53402 oder der DIN-Norm EN ISO 2114.

Die Umsetzung erfolgt dabei unter Bedingungen, die auf die jeweiligen verwendeten Systeme abgestimmt sind. Die Reaktionsbedingungen hängen in diesem Fall somit von den jeweiligen Reaktionskomponenten ab. In der Regel findet die Umsetzung bei Temperaturen in einem Bereich von 60 bis 200 °C statt und bevorzugt bei Temperaturen unterhalb von 140°C statt. Die Umsetzung kann dabei mit und ohne Zusatz eines Katalysators durchgeführt werden.

Wenn im Rahmen der Umsetzung Katalysatoren verwendet werden, so sind Phosphorverbindungen, beispielsweise Triphenylphosphin, und tertiäre Amine, beispiels-weise Benzyldimethylamin, möglich.

Die Verwendung eines Katalysators ist insbesondere dann bevorzugt, wenn das Blockcopolymer nicht unmittelbar in der sich anschließenden Phenolharzsynthese eingesetzt wird, da die Verwendung von Katalysatoren während der Herstellung zu einer geringen Lagerstabilitätder resultierenden Blockcopolymere führen kann.

Das Blockcopolymer kann bei einer Lagerung bis zu dem Zeitpunkt der Weiterarbeitung und/oder einem Transport bis zum Ort der Weiterverabeitung geeigneterweise in einem Lösungsmittel, das nicht alleinig Wasser ist, aufgenommen werden. Als bevorzugte Lösungsmittel dienen hierbei Wasser mischbare Lösungsmittel, die insbesondere auch bei der Phenolharzherstellung Verwendung finden können, zum Beispiel Ketone wie Aceton und Methylethylketon (MEK). Der Zusatz an Lösungsmittel kann möglichst gering gehalten werden, um das Transportvolumen zu minimieren. Es sollte aber so hoch sein, Blockcopolymer einfach zu handhaben und weiterzuverarbeiten ist (z.B: gut pumpbar). Der Anteil des Blockcopolymers in dem Lösungsmittel beträgt vorteilhafterweise 30-90%, bevorzugt 40-85% und besonders bevorzugt 50-80%.

### Herstellung des erfindunasaemäßen Phenolharzes

Der die aromatischen Einheiten aufweisende Kautschuk kann in die Vorlage für die Phenolharzherstellung eingebracht und dann mit der Phenolkomponente und der Aldehydkomponente umgesetztwerden.

Die Herstellung der erfindungsgemäßen Phenolharze kann wie aus dem Stand der Technik bekannt unter Anwendung saurer (Novolake) oder basischer Katalyse (Resole) durchgeführt werden. Dieses erfolgt durch eine dem Fachmann hinlänglich literaturbekannte Kondensationsreaktion bei erhöhter Temperatur, beispielsweise unter Rückflusstemperatur. In Abhängigkeit der Art des Katalysators, dessen Zugabemenge sowie der angewendeten Temperaturen entstehen unterschiedliche Phenolharze. Die Durchführung der entsprechenden Kondensationsreaktionen ist dem Fachmann an sich bekannt; gemäß dem Stand der Technik kann der Fachmann bei der Herstellung der erfindungsgemäßen Phenol- harze die Reihenfolge der Zugabe der Reaktanden, die Temperaturführung sowie die An- wendung von zwischengeschalteten Destillationsschritten variieren.

Dabei ist es bevorzugt, dass zunächst die Phenolkomponente und der aromatische Einheiten aufweisende Kautschuk vorgelegt werden und anschließend die Aldehydkomponente eingebracht wird. Die Aldehydkomponente kann dabei langsam in die Vorlage eingespeist werden, die mit der Phenolkomponente und dem aromatische Einheiten aufweisenden Kautschuk befüllt ist, oder aber langsam durch eine entsprechende Vorläuferverbindung freigesetzt werden.

In einer besonders bevorzugten Ausführungsform werden die Herstellung des aromatische Einheiten aufweisenden Kautschuks sowie die Herstellung des erfindungsgemäßen Phenolharzes in einer Eintopfreaktion durchgeführt. Das heißt, dass der zunächst hergestellte aromatische Einheiten aufweisende Kautschuk unmittelbar, also im Wesentlichen ohne Aufarbeitung, Abtrennung der Reinigung, zur Herstellung des erfindungsgemäßen Phenolharzes verwendet wird und/oder in einem Reaktionsgefäß durchgeführt wird. Zu diesem Zweck wird er nach der Herstellung des Kautschuks mit der Phenolkomponente versetzt, und dann wird die Aldehydkomponente zugegeben bzw. aus einer Vorläuferverbindung freigesetzt.

Unter Verwendung des erfindungsgemäß vorgesehenen aromatische Einheiten aufweisenden Kautschuks ist es möglich, Resole und Novolake herzustellen.

Wenn Novolake hergestellt werden sollen, können die Phenolkomponente, der aromatische Einheiten aufweisende Kautschuk und die Aldehydkomponente unter Einwirkung von Säure, insbesondere organischer Säuren, beispielsweise Oxalsäure, umgesetztwerden.

Wenn Resole hergestellt werden sollen, können die Phenolkomponente, der aromatische Einheiten aufweisende Kautschuk und die Aldehydkomponente unter der Einwirkung von Basen, insbesondere organischen Basen, umgesetzt werden. In einer bevorzugten Ausführungsform beträgt der Anteil des aromatische Einheiten aufweisenden Kautschuks bezogen auf die Phenolkomponente oder die Aldehydkomponente 0,5 - 15 %, 1 - 10 %; oder 2- 8 %.

Für die Phenolharzherstellung kann ein Lösemittel verwendet werden, welches ausgewählt ist aus der Gruppe bestehend aus Wasser oder Alkohole, z.B. Methanol, oder Gemischen davon.

Im Rahmen der vorliegenden Erfindung kann das aus dieser Umsetzung resultierende Harz anschließend destilliert werden, um das Lösemittel, phenolische Anteile, Anteile, welche auf die Formaldehydkomponente zurückgehen, sowie . gegebenenfalls weitere leichtflüchtige Komponenten aus dem Reaktionssystem zumindest teilweise oder auch vollständig zu ent- fernen. Diese Entfernung von flüchtigen Bestandteilen ist in Abhängigkeit des gewünschten Anwendungsgebiets der Phenolharzejedoch nicht zwingend erforderlich.

Durch die Verwendung eines Blockcopolymers während der Herstellung des erfindungsgemäßen Phenolharzes erhält man ein transparentes und homogenes Harzsystem, das zur Weiterverarbeitung in einer Vielzahl von Verfahren und Anwendungen geeignet ist.

Die Charakterisierung der erfindungsgemäßen Phenolharze kann üblicherweise durch die Messung der Viskosität, des Festkörpergehalts, durch den Gehalt an freiem Formaldehyd und die B-Zeit, dessen Bestimmung mittels einer Heizplatte durchgeführt wird, erfolgen. Die B-Zeit gibt die Zeit bis zur vollständigen Vernetzung des Harzes an.

Die resultierenden Phenolharze können gegebenenfalls weiteren Modifikationen unterworfen werden. So ist es beispielsweise möglich, die resultierenden Phenolharze mit einem Lösemittel, beispielsweise Methylethylketon (MEK) zu versetzen. Hierdurch können sich bestimmte Anwendungsgebiete für die erfindungsgemäßen Phenolharze erschließen.

Ein weiterer Gegenstand der vorliegenden Erfindung sind die nach diesem Verfahren erhältlichen Phenolharze.

### Phenolharzformulierung

Weiterer Gegenstand der vorliegenden Erfindung sind Phenolharzformulierungen, welche die erfindungsgemäßen Phenolharzeenthalten.

Weitere Bestandteile dieser Phenolharzformulierung können andere, beliebige Phenolharze sowie weitere Zusatzstoffe oder Additive sein.

Auch können die erfindungsgemäßen Phenolharze zur Modifikation anderer Harzsysteme außer Phenolharzen verwendet werden. Zu diesem Zweck werden die erfindungsgemäßen Phenolharze mit den anderen Harzsystemen, bei welchen es sich beispielsweise um Melaminharze, Harnstoffharze, Polyurethanharze, Bismaleinimidharze und Cyanuratharze handeln kann, formuliert.

Weiterer Gegenstand der vorliegenden Erfindung sind daher auch Melaminharze, Harnstoffharze, Polyurethanharze, Bismaleinimidharze und Cyanuratharze welche die erfindungsgemäßen Phenolharze, gegebenenfalls in der Form einer Formulierung, enthalten.

Durch Abstimmung der einzelnen Bestandteile der Phenolharzformulierungen, insbesondere durch die Abmischung erfindungsgemäßer Phenolharze mit Standardharzen, kann die Zähigkeit, Sprödigkeit und Flexibilität der entsprechenden Phenolharzformulierungen gesteuert werden.

### Verwendung der erfindungsgemäßen Phenolharze bzw. Phenolharzformulierungen

Weiterer Gegenstand der vorliegenden Erfindung ist die Verwendung der erfindungsgemäßen Phenolharze. Im Allgemeinen ist die Verwendung der erfindungsgemäßen Phenolharze überall dort gefragt, wo konventionelle Phenolharzsysteme, also Phenolharze, welche ohne Verwendung des aromatische Einheiten aufweisenden Kautschuks hergestellt werden, hinsichtlich Zähigkeit und Flexibilität an ihre Grenzen stoßen.

Die Anwendungsgebiete der erfindungsgemäßen Phenolharze bzw. Phenolharzformulierungen liegen beispielsweise im Bereich der faserverstärkten Laminate, z.B. zur Herstellung von Paneelen für den Flugzeugbau, und für die Innenauskleidung von Schienenfahrzeugen.

Weitere Verwendungszwecke sind Papieranwendungen, beispielsweise bei der Herstellung von Hartpapieren und Filtern, sowie Holzanwendungen, beispielsweise bei der Herstellung von Schichtpressstoffen.

Weitere Anwendungsgebiete der erfindungsgemäßen Phenolharze oder Phenolharzformulierungen sind die Herstellung von Reib- und Schleifbelägen, von Brems- und Kupplungsbelägen und von Schleifpapier.

Auch für Anwendungen im Bereich der Elektronik und Elektrotechnik, im Gebäusebau für Haushaltsgeräte sowie Anwendungen im Bereich der Gießereiindustrie können die erfindungsgemäßen Phenolharze sowie Phenolharzformulierungen eingesetzt werden. Damit ist es möglich, diejeweiligen Eigenschaftsprofile des Endprodukts deutlich zu verbessern.

Weiterer Gegenstand der vorliegenden Erfindung ist darüber hinaus die Verwendung von aromatische Einheiten aufweisenden Kautschuk zur Herstellung von Phenolharzen.

Die vorliegende Erfindung wird anhand der nachfolgenden Beispiele näher erläutert.

### Beispiele:

### Herstellung eines erfindungsgemäß zu verwendenden Blockcopolymers (Beispiel 1a)

8 kg eines entsprechenden reaktiven Flüssigkautschuks, Hypro CTBN 1300x8 (Hersteller Emerald Performance Materials, U.S.A), werden in einem 25 kg Reaktionsgefäß vorgelegt. Aufgrund der hohen Viskosität des Flüssigkautschuks wird dieser zur besseren Dosierung auf 50 bis 100 °C vorgewärmt. Dann werden 2 kg eines handelsüblichen Bisphenol-A- Diglycidylethers, z.B. Epikote® 828 (Hersteller Hexion, U.S.A.) oder Araldite® GY 250 (Hersteller Huntsman, Schweiz) zugegeben. Die Umsetzung zum Copolymer wird bei Normaldruck und 140 °Cwährend 2 Stunden durchgeführt.

Man erhält ein hochviskoses Blockcopolymer mit einer Säurezahl < 1; d.h. die vorher im Reaktivkautschuk vorhandenen Carboxygruppen haben mit Epoxidgruppen reagiert. Auch das Epoxidäquivalent von 1600 bestätigt dies. Die Viskosität beträgt 3200 Pas (bei 25 °C). Gemäß dieser Verfahrensweise wurden folgende weiteren Blockcopolymere hergestellt:

### Beispiel 1b:

9 kg HyproTM CTBN 1300x8, 1 kg Araldite® GY 250
EEW 7200, 8900Pas

### Beispiel 1c:

7 kg HyproTM CTBN 1300x8, 3 kg Araldite® GY
250 EEW 800, 1050 Pas

### Beispiel 1d:

8 kg Hypro™ CTBN 1300x8, 2 kg Cardolite® NX 476
EEW 14159, 140Pas

### Beispiel 1e:

8 kg Hypro™ CTBN 1300x8, 2 kg Polypox® R6 EEW
1500, 64Pas

### Beispiel 1f:

8 kg HyproTM CTB 2000x162, 2 kg Araldite® GY 250 EEW
1550, 5400 Pas

### Beispiel 1g:

8 kg Hypro™ CTBN 1300 x31, 2 kg Araldite® GY 250
EEW 1600, 2600 Pas

### Herstellung mit Blockcopolymeren modifizierter Phenolharze (Beispiel 2a):

10 kg Phenol, 14,66 kg Formalin (37 o/oig), 3,746 kg Wasser und 0,5 kg des Blockcopolymeren aus Beispiel 1a werden in einem 25 kg Reaktionsgefäß vorgelegt. Bei 50 C wird 60 Minuten lang homogenisiert. Dann werden 0,38 kg 50 %ige Natronlauge zugegeben und die Temperatur wird auf 80 bis 85 °C erhöht.

120 Minuten lang wird die Kondensationsreaktion durchgeführt. Anschließend wird bei einem Vakuum von 50 - 55 mbar und einer Temperatur von 50 °C Wasser bis zum gewünschten Festgehalt abdestilliert.

### Vergleichsbeispiel 2b

Zu Vergleichszwecken wird analog zu Beispiel 2a) ein Phenolharz hergestellt, welches jedoch kein Blockcopolymer enthält. Es wird in den Anwendungsbeispielen als Kontrolle bezeichnet.

### Einsatz der modifizierten Phenolharze zur Papierverstärkung

Natroncraftpapier mit einem Flächengewicht von 80 g/m² wird zum einen mit der Kontrolle nach Beispiel 3, zum anderen mit dem modifizierten Harzsystem nach Beispiel 2 imprägniert. Die Teststreifen werden im Trockenschrank bei 130 °C völlig ausgehärtet.

Eine Prüfung der Bruchlast ergibt für die Kontrolle einen Mittelwert von 139,5 N und für das modifizierte System 159,3 N. Das heißt, dass das mit den Blockcopolymeren modifizierte Phenolharz ist deutlich zähelastischer.

## Patentansprüche

1. Verfahren zur Herstellung eines Phenolharzes umfassend folgende Schritte:
a) Bereitstellung mindestens eines Blockcopolymers enthaltend mindestens ein Weichsegment und mindestens ein Hartsegment,
wobei das Blockcopolymer durch Umsetzung eines Kautschuks (Weichsegment) mit einem aromatischen System (Hartsegment) erhältlich ist,
wobei das Weichsegment ein Flüssigkautschuk ist,
wobei das aromatische System ausgewählt ist aus der Gruppe bestehend aus den Kondensationsprodukten von Epichlorhydrin und Bisphenol, epoxidierten Novolaken, DGEBA-Festharzen, Kresol-Novolak-Epoxidharzen, epoxidierten Cashewnussschalenölen, Tolyloxymethyloxiran und Phenalkaminen, aromatischen Säureanhydriden
b) Umsetzung des mindestens einen Blockcopolymers mit einer Phenolkomponente und einer Aldehydkomponente, wobei das Blockcopolymer über die reaktiven Aromaten unter Bildung von Methylengruppen, in das Phenolharz eingebaut wird,
wobei der Anteil an Blockcopolymer im Phenolharz 0,5 bis 15 Gew.-% bezogen auf das Gesamtgewicht des Phenolharzes beträgt.

2. Verfahren nach Anspruch 1 **dadurch gekennzeichnet, dass** der Kautschuk ausgewählt ist aus der Gruppe bestehend aus Homopolymeren des Butadiens; Copolymeren des Butadiens mit Acrylnitril; carboxyfunktionelle, aminfunktionelle oder methacrylatfunktionelle Homopolymeren des Butadiens, carboxyfunktionellen, aminfunktionellen oder methacrylatfunktionellen Copolymeren des Butadiens mit Acrylnitril; carboxyfunktionellen oder methacrylatfunktionellen Terpolymeren aus Butadien, Acrylnitril und Acrylsäure; carboxyfunktionelle, epoxyfunktionelle, hydroxyfunktionelle sowie acrylatfunktionelle Polybutadiene; isocyanatfunktionelle Flüssigkautschuke und mit Maleinsäure gepfropfte Polybutadiene.

3. Verfahren nach einem der Ansprüche 1 oder 2 **dadurch gekennzeichnet, dass** das Blockcopolymer ohne Aufarbeitung, Abtrennung oder Reinigung mit einer Aldehydkomponente und einer Phenolkomponente umgesetzt wird und/oder die beiden Reaktionsschritte in einem Reaktionsgefäß ablaufen.

4. Verfahren nach einem der Ansprüche 1 bis 3 **dadurch gekennzeichnet, dass** die Phenolkomponente ausgewählt ist aus der Gruppe bestehend aus Phenol; mit Alkyl substituierten Derivaten des Phenols; höher alkylierten Phenolen; mit Halogen substituierten Phenolen; mehrwertigen Phenolen; phenolischem Melamin; und mehrkernigen Phenolen.

5. Verfahren nach Anspruch 4 **dadurch gekennzeichnet, dass** die mehrkernigen Phenole ausgewählt sind aus der Gruppe bestehend aus Naphtholen, Bisphenol A und Bisphenol F.

6. Verfahren nach einem der Ansprüche 1 bis 5 **dadurch gekennzeichnet, dass** die Aldehydkomponente ausgewählt werden aus der Gruppe bestehend aus Formaldehyd, Acetaldehyd, Propionaldehyd, n-Butyraldehyd, iso-Butyraldehyd, Glyoxal und Furfural.

7. Phenolharz, erhältlich gemäß einem der Verfahren nach einem der Ansprüche 1 bis 6.

8. Phenolharz nach Anspruch 7 **dadurch gekennzeichnet, dass** der Anteil an Blockcopolymer in dem Phenolharz 1 bis 10 Gew.-% beträgt.

9. Phenolharz nach Anspruch 8 **dadurch gekennzeichnet, dass** der Anteil an Blockcopolymer in dem Phenolharz 2 bis 8 Gew.-%, bezogen auf das Phenolharz, beträgt.

10. Phenolharz nach einem der Ansprüche 7 bis 9 **dadurch gekennzeichnet, dass** das Blockcopolymer ein Epoxidäquivalent von mehr als 1000 aufweist.

11. Phenolharz nach einem der Ansprüche 7 bis 10 **dadurch gekennzeichnet, dass** das Blockcopolymer eine Säurezahl von weniger als 5 aufweist.

12. Phenolharzformulierung, enthaltend ein Phenolharz gemäß einem der Ansprüche 7 bis 11.

13. Herstellung einer Phenolharzformulierung gemäß Anspruch 12 durch Mischen eines Phenolharzes gemäß einem der Ansprüche 7 bis 11 mit Additiven und/oder anderen Harzen, ausgewählt aus der Gruppe, bestehend aus Phenolharzen, Melaminharzen, Harnstoffharzen, Polyurethanharzen, Bismaleinimidharzen und Cyanuratharzen.

14. Verwendung eines Phenolharzes gemäß einem der Ansprüche 7 bis 11 oder einer Phenolharzformulierung gemäß Anspruch 12 im Bereich der faserverstärkten Laminate, im Bereich der Papieranwendungen, im Bereich der Holzanwendungen, bei der Herstellung von Reib- und Schleifbelägen, Brems- und Kupplungsbelägen und Schleifpapier, im Bereich der Elektronik und Elektrotechnik, im Gebäudebau für Haushaltsgeräte und im Bereich der Gießereiindustrie.

15. Verwendung gemäß Anspruch 14 zur Herstellung von Paneelen für den Flugzeugbau und für die Innenauskleidung von Schienenfahrzeugen, bei der Herstellung von Hartpapieren und Filtern und bei der Herstellung von Schichtpressstoffen.

## Claims

1. Process for producing a phenolic resin encompassing the following steps:
a) provision of at least one block copolymer comprising at least one soft segment and at least one hard segment,
where the block copolymer is obtainable via reaction of a rubber (soft segment) with an aromatic system (hard segment), where the soft segment is a liquid rubber,
where the aromatic system has been selected from the group consisting of the condensates of epichlorohydrin and bisphenol, epoxidized novolaks, solid DGEBA resins, cresol-novolak epoxy resins, epoxidized cashew nut shell oils, tolyloxymethyloxirane, and phenalkamines, and aromatic acid anhydrides,
b) reaction of the at least one block copolymer with a phenolic component and with an aldehyde component, where the block copolymer is incorporated into the phenolic resin by way of the reactive aromatics, to form methylene groups,
where the proportion of block copolymer in the phenolic resin is from 0.5 to 15% by weight, based on the total weight of the phenolic resin.

2. Process according to Claim 1, **characterized in that** the rubber has been selected from the group consisting of homopolymers of butadiene; copolymers of butadiene with acrylonitrile; carboxy-functional, amine-functional, or methacrylate-functional homopolymers of butadiene, carboxy-functional, amine-functional, or methacrylate-functional copolymers of butadiene with acrylonitrile; carboxy-functional or methacrylate-functional terpolymers of butadiene, acrylonitrile, and acrylic acid; carboxy-functional, epoxy-functional, hydroxy-functional, and acrylate-functional polybutadienes; isocyanate-functional liquid rubbers, and maleic-acid-grafted polybutadienes.

3. Process according to either of Claims 1 and 2, **characterized in that** the block copolymer is reacted without work-up, isolation, or purification with an aldehyde component and with a phenolic component, and/or the two reaction steps proceed in a single reaction vessel.

4. Process according to any of Claims 1 to 3, **characterized in that** the phenolic component has been selected from the group consisting of phenol; alkyl-substituted derivatives of phenol; phenols of relatively high alkylation level; halogen-substituted phenols; polyhydric phenols; phenolic melamine; and polynuclear phenols.

5. Process according to Claim 4, **characterized in that** the polynuclear phenols have been selected from the group consisting of naphthols, bisphenol A, and bisphenol F.

6. Process according to any of Claims 1 to 5, **characterized in that** the aldehyde component is selected from the group consisting of formaldehyde, acetaldehyde, propionaldehyde, n-butyraldehyde, isobutyraldehyde, glyoxal, and furfural.

7. Phenolic resin obtainable by any of the processes according to any of Claims 1 to 6.

8. Phenolic resin according to Claim 7, **characterized in that** the proportion of block copolymer in the phenolic resin is from 1 to 10% by weight.

9. Phenolic resin according to Claim 8, **characterized in that** the proportion of block copolymer in the phenolic resin is from 2 to 8% by weight, based on the phenolic resin.

10. Phenolic resin according to any of Claims 7 to 9, **characterized in that** the epoxy equivalent of the block copolymer is more than 1000.

11. Phenolic resin according to any of Claims 7 to 10, **characterized in that** the acid number of the block copolymer is less than 5.

12. Phenolic-resin formulation comprising a phenolic resin according to any of Claims 7 to 11.

13. Production of a phenolic-resin formulation according to Claim 12 via mixing of a phenolic resin according to any of Claims 7 to 11 with additives and/or other resins selected from the group consisting of phenolic resins, melamine resins, urea resins, polyurethane resins, bismaleimide resins, and cyanurate resins.

14. Use of a phenolic resin according to any of Claims 7 to 11, or of a phenolic-resin formulation according to Claim 12, in the sector of fiber-reinforced laminates, in the sector of paper applications, in the sector of timber applications, in the production of frictional and abrasive coverings, and brake and clutch coverings, and abrasive paper, in the sector of electronics and electrical engineering, in the construction of buildings, for household devices, and in the foundry-industry sector.

15. Use according to Claim 14 for producing panels for aircraft construction and for the interior trim of rail vehicles, in the production of paper-based laminates and of filters, and in the production of high-pressure laminates.

## Revendications

1. Procédé de fabrication d'une résine de phénol comprenant les étapes suivantes :
a) la préparation d'au moins un copolymère séquencé contenant au moins un segment souple et au moins un segment dur,
le copolymère séquencé pouvant être obtenu par mise en réaction d'un caoutchouc (segment souple) avec un système aromatique (segment dur),
le segment souple étant un caoutchouc liquide,
le système aromatique étant choisi dans le groupe constitué par les produits de condensation d'épichlorhydrine et de bisphénol, les novolaques époxydées, les résines solides de DGEBA, les résines de crésol-novolaque-époxyde, les huiles de coques de noix de cajou époxydées, le tolyloxyméthyloxirane et les phénalkamines, les anhydrides d'acides aromatiques,
b) la mise en réaction dudit au moins un copolymère séquencé avec un composant phénol et un composant aldéhyde, le copolymère séquencé étant incorporé dans la résine de phénol par le biais des composés aromatiques réactifs avec formation de groupes méthylène,
la proportion de copolymère séquencé dans la résine de phénol étant de 0,5 à 15 % en poids, par rapport au poids total de la résine de phénol.

2. Procédé selon la revendication 1, **caractérisé en ce que** le caoutchouc est choisi dans le groupe constitué par les homopolymères de butadiène ; les copolymères de butadiène avec de l'acrylonitrile, les homopolymères de butadiène à fonction carboxy, à fonction amino ou à fonction méthacrylate, les copolymères de butadiène à fonction carboxy, à fonction amino ou à fonction méthacrylate avec de l'acrylonitrile ; les terpolymères à fonction carboxy ou à fonction méthacrylate de butadiène, d'acrylonitrile et d'acide acrylique ; les polybutadiènes à fonction carboxy, à fonction époxy, à fonction hydroxy et à fonction acrylate ; les caoutchoucs liquides à fonction isocyanate et les polybutadiènes greffés avec de l'acide maléique.

3. Procédé selon l'une quelconque des revendications 1 ou 2, **caractérisé en ce que** le copolymère séquencé est mis en réaction sans traitement, séparation ou purification avec un composant aldéhyde et un composant phénol, et/ou les deux étapes de réaction se déroulent dans un récipient de réaction.

4. Procédé selon l'une quelconque des revendications 1 à 3, **caractérisé en ce que** le composant phénol est choisi dans le groupe constitué par le phénol ; les dérivés de phénol substitués avec alkyle ; les phénols alkylés supérieurs ; les phénols substitués avec halogène ; les phénols polyvalents ; la mélamine phénolique ; et les phénols polynucléaires.

5. Procédé selon la revendication 4, **caractérisé en ce que** les phénols polynucléaires sont choisis dans le groupe constitué par les naphtols, le bisphénol A et le bisphénol F.

6. Procédé selon l'une quelconque des revendications 1 à 5, **caractérisé en ce que** le composant aldéhyde est choisi dans le groupe constitué par le formaldéhyde, l'acétaldéhyde, le propionaldéhyde, le n-butyraldéhyde, l'iso-butyraldéhyde, le glyoxal et le furfural.

7. Résine de phénol, pouvant être obtenue par un procédé selon l'une quelconque des revendications 1 à 6.

8. Résine de phénol selon la revendication 7, **caractérisée en ce que** la proportion de copolymère séquencé dans la résine de phénol est de 1 à 10 % en poids.

9. Résine de phénol selon la revendication 8, **caractérisée en ce que** la proportion de copolymère séquencé dans la résine de phénol est de 2 à 8 % en poids, par rapport à la résine de phénol.

10. Résine de phénol selon l'une quelconque des revendications 7 à 9, **caractérisée en ce que** le copolymère séquencé présente un équivalent d'époxyde de plus de 1 000.

11. Résine de phénol selon l'une quelconque des revendications 7 à 10, **caractérisée en ce que** le copolymère séquencé présente un indice d'acidité de moins de 5.

12. Formulation de résine de phénol, contenant une résine de phénol selon l'une quelconque des revendications 7 à 11.

13. Fabrication d'une formulation de résine de phénol selon la revendication 12 par mélange d'une résine de phénol selon l'une quelconque des revendications 7 à 11 avec des additifs et/ou d'autres résines, choisies dans le groupe constitué par les résines de phénol, les résines de mélamine, les résines d'urée, les résines de polyuréthane, les résines de bismaléinimide et les résines de cyanurate.

14. Utilisation d'une résine de phénol selon l'une quelconque des revendications 7 à 11 ou d'une formulation de résine de phénol selon la revendication 12 dans le domaine des stratifiés renforcés par des fibres, dans le domaine des applications de papier, dans le domaine des applications de bois, lors de la fabrication de garnitures de friction et d'abrasion, de garnitures de frein et d'embrayage, et de papier abrasif, dans le domaine de l'électronique et de l'électrotechnique, dans la construction de bâtiments, pour des appareils ménagers et dans le domaine de l'industrie des fonderies.

15. Utilisation selon la revendication 14 pour la fabrication de panneaux pour la construction d'avions et pour l'habillage intérieur de véhicules ferroviaires, lors de la fabrication de papiers durs et de filtres et lors de la fabrication de stratifiés.
